# EUROPÄISCHE PATENTSCHRIFT

(11) **EP 3 734 492 B1**
(45) Veröffentlichungstag und Bekanntmachung des Hinweises auf die Patenterteilung: **30.06.2021**
(21) Anmeldenummer: 19171484.9
(22) Anmeldetag: 29.04.2019
(51) Int. Cl.: G06K 7/00

(54) **KARTENLESER MIT SHIM-ATTACKEN-DETEKTIERUNG**
CARD READER WITH SHIM ATTACK DETECTION
LECTEUR DE CARTES À DÉTECTION D'ATTAQUE DE CORRECTEURS DE CHAMP MAGNÉTIQUE

(43) Veröffentlichungstag der Anmeldung: 04.11.2020
(73) Patentinhaber: ddm hopt + schuler GmbH & Co. KG., 78628 Rottweil (DE)
(72) Erfinder: Hopt, Karl-Rudolf, 78628 Rottweil (DE)
(74) Vertreter: Kohler Schmid Möbus Patentanwälte

(56) Entgegenhaltungen:
- EP-A1- 0 516 943
- EP-A1- 3 012 783
- WO-A1-2017/142414

## Beschreibung

Die vorliegende Erfindung betrifft einen Kartenleser zum Datenaustausch mit einer bis in eine Datenaustauschposition in ein Kartenlesergehäuse eingeführten Chipkarte, mit mindestens einem im Kartenlesergehäuse ortsfest oder in Karteneinführrichtung verschiebbar angeordneten, elektrischen Kontakt, der in der Datenaustauschposition mit einer Kontaktfläche in die Kartenbahn der eingeführten Chipkarte hineinragt, und mit mindestens einer Detektoreinrichtung, die bei ortsfest im Kartenlesergehäuse angeordnetem Kontakt auf die Kontaktfläche des Kontakts oder auf den Bereich um diese Kontaktfläche herum gerichtet ist oder die bei in Karteneinführrichtung verschiebbar im Kartenlesergehäuse angeordnetem Kontakt auf diejenige Position im Kartenleser, an der sich die Kontaktfläche in der Datenaustauschposition befindet, oder auf den Bereich um diese Position herum gerichtet ist.

Ein derartiger Kartenleser ist beispielsweise durch die EP 0 516 943 A1 bekannt.

Zu Manipulationszwecken kann auf die Unterseite einer Chipkarte eine Manipulationsfolie mit einer klebenden Außenseite aufgebracht werden. Beim Einführen einer solchen präparierten Chipkarte bleibt die Manipulationsfolie dann auf den Kontakten kleben. Beim erneuten Einführen einer Chipkarte liegen die Kontakte dann über die dazwischen liegende Manipulationsfolie an den Kontaktfeldern der Chipkarte an. Die Manipulationsfolie weist im Bereich der Kontakte elektrische Durchkontaktierungen auf, welche die elektrische Verbindung zwischen Kontakten und Kontaktfeldern weiterhin aufrechterhalten. Außerdem trägt die Manipulationsfolie eine von außen drahtlos abrufbare Schnittstelle (z.B. in Form eines Senders), die mit der einem I/O-Kontakt zugeordneten Durchkontaktierung verbunden ist, um die über den I/O-Kontakt übertragenen Daten zu Manipulationszwecken mitzulesen (so genannte Shim-Attacke).

Aus der eingangs genannten EP 0 516 943 A1 ist eine Detektoreinrichtung in Form eines mechanischen Schalters bekannt, der die Anwesenheit einer Karte meldet.

Die WO 2017/142414 A1 offenbart eine Anti-Shimming- und/oder Anti-Skimming-Vorrichtung, die in einem Kartenleser mit einem Karteneinführschlitz angeordnet wird. Die Vorrichtung umfasst einen Karteneinführraumbegrenzer zum Begrenzen des Einführraums der Karte während des Einführens in den Kartenleser, einen Raumbegrenzer auf der Oberseite, der den Einführungsraum auf der Oberseite der Karte begrenzt, und einen Raumbegrenzer auf der Unterseite, der den Einführungsraum auf der Unterseite der Karte begrenzt. Die Vorrichtung wird auf der Innenseite des Kartenlesers zwischen dem Oberseitenraumbegrenzer und dem Unterseitenraumbegrenzer benachbart zu Kartenlesekontakten des Kartenlesers angeordnet.

Aus der EP 3 012 783 A1 ist eine Anti-Skimming- oder Anti-Shimming-Vorrichtung zum Anordnen innerhalb eines Kartenlesegeräts bekannt, wobei neben einem Magnetstreifen-Lesekopf oder einem Chip-Lesekopf eine Folie aus Schutzmaterial angeordnet wird.

Es ist demgegenüber die Aufgabe der vorliegenden Erfindung, bei einem Kartenleser der eingangs genannten Art eine solche Shim-Attacke zuverlässig zu detektieren.

Diese Aufgabe wird erfindungsgemäß dadurch gelöst, dass die mindestens eine Detektoreinrichtung als eine Einweglichtschranke, eine Reflexlichtschranke, eine Kamera oder ein induktiver Sensor ausgebildet ist.

Erfindungsgemäß überprüft die Detektoreinrichtung, ob in dem Bereich der Kontaktfläche oder in derjenigen Position im Kartenleser, an der sich die Kontaktfläche in der Datenaustauschposition befindet, eine Manipulationsfolie angeordnet ist. Bei der Manipulationsfolie kann es sich beispielsweise um eine Flex-Leitungen oder eine Folie mit Kontaktmaterial handeln, die geeignet ist, einerseits die elektrische Verbindung zwischen Kontakten und Kontaktfeldern weiterhin aufrechtzuerhalten und andererseits die übertragenen Daten zu Manipulationszwecken abzugreifen.

Die mindestens eine Detektoreinrichtung kann vorteilhaft als eine z.B. durch die Durchgangsöffnung hindurchgehende Einweglichtschranke, als eine z.B. auf die Kontaktfläche oder auf die Durchgangsöffnung gerichtete Reflexlichtschranke, als eine z.B. auf die Kontaktfläche oder auf die Durchgangsöffnung gerichtete Kamera oder als ein z.B. auf die Kontaktfläche oder auf die Durchgangsöffnung gerichteter induktiver Sensor ausgebildet sein. Über die Detektoreinrichtung werden Zustände vor und nach dem Einführen einer Chipkarte aufgenommen und später dann miteinander verglichen. Eine dabei festgestellte Abweichung wird von einer Überwachungselektronik als Shim-Attacke erkannt und dann kein Lesevorgang des Kartenlesers mehr zugelassen.

Vorzugsweise weist der Kartenleser eine Auflagefläche auf, auf der die eingeführte Chipkarte in der Datenaustauschposition aufliegt, wobei der mindestens eine Kontakt in der Datenaustauschposition eine Durchgangsöffnung der Auflagefläche durchgreift. Die Auflagefläche dient erfindungsgemäß dazu, eine zunächst auf den Kontakten klebende Manipulationsfolie von den Kontakten zu lösen und dabei selbst aufzunehmen.

Besonders bevorzugt ist der mindestens eine Kontakt an einem Kontaktträger befestigt, der im Kartenlesergehäuse in Einführrichtung der Chipkarte zwischen einer Ausgangs- und einer Endstellung verschiebbar geführt ist und von einer eingeführten Chipkarte bis in die Endstellung mitgenommen wird, in welcher der mindestens eine Kontakt durch die Durchgangsöffnung hindurch in Anlage an die eingeführte Chipkarte bewegt ist. Beim Bewegen des Kontaktträgers in Anlage an die eingeführte Chipkarte werden die Kontakte gegen die Manipulationsfolie gedrückt, die daran kleben bleibt. Bei der nachfolgenden Bewegung des Kontaktträgers fort von der eingeführten Chipkarte wird die Manipulationsfolie durch die Auflagefläche von den Kontakten gelöst und klebt dann auf der großflächigen Auflagefläche fest.

Die mindestens eine Detektoreinrichtung kann an dem verschiebbaren Kontaktträger oder aber ortsfest am Kartenlesergehäuse befestigt sein.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fign. 1a, 1b: den erfindungsgemäßen Kartenleser mit einer als Einweglichtschranke ausgebildeten Detektoreinrichtung in einer Längsschnittansicht (Fig. 1a) und in einer Draufsicht von oben auf einen Kontaktträger des Kartenlesers (Fig. 1b);
- Fign. 2a-2c: den in Fig. 1 gezeigten Kartenleser mit einer Chipkarte, die in Fig. 2a ihre Datenaustauschposition noch nicht erreicht hat und in Fig. 2b in ihrer Datenaustauschposition gezeigt ist, sowie mit einer Manipulationsfolie (Fig. 2c); und
- Fig. 3: den Kontaktträger des erfindungsgemäßen Kartenlesers mit einer aus zwei Reflexlichtschranken bestehenden Detektoreinrichtungen in einer perspektivischen Ansicht von oben.

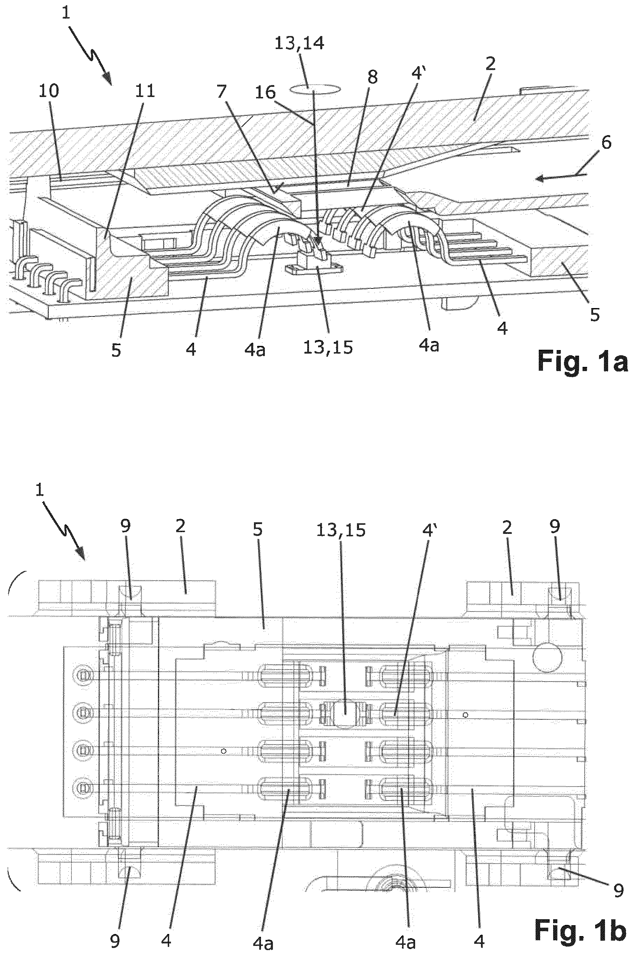

Der in **Fign. 1a, 1b** gezeigte Kartenleser **1** dient zum Datenaustausch mit einer bis in eine Datenaustauschposition in ein Kartenlesergehäuse **2** eingeführten Chipkarte **3,** die oft auch als Smartcard oder Integrated Circuit Card (ICC) bezeichnet wird Die Chipkarte 3 trägt zum Speichern der Daten einen Mikrochip (nicht gezeigt), dessen Kontakte als elektrische Kontaktfelder (nicht gezeigt) auf der Kartenoberfläche vorgesehen sind.

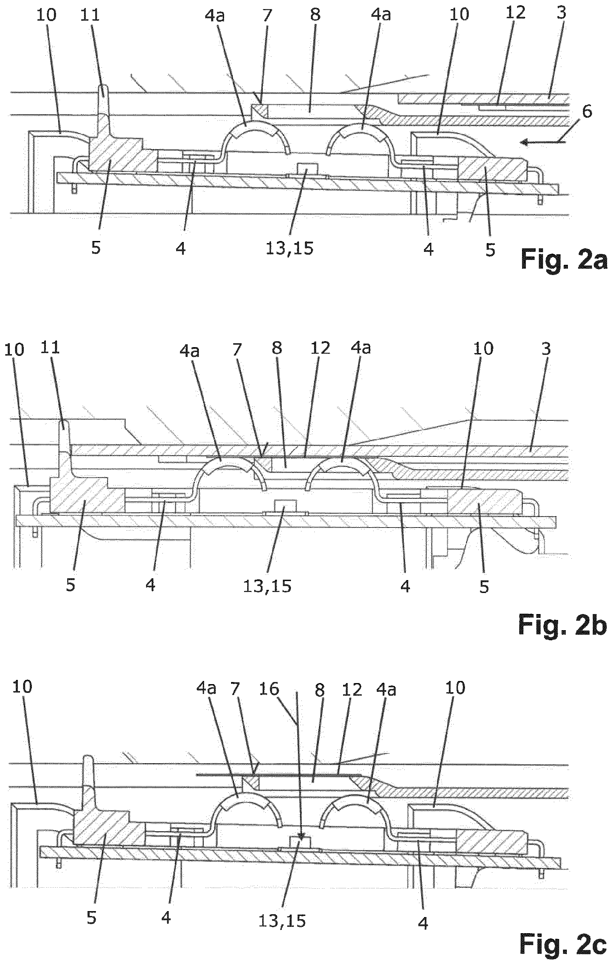

Zum Kontaktieren der Kontaktfelder der Chipkarte 3 weist der Kartenleser 1 mehrere Kontakte **4** (hier acht Kontakte zu zwei Reihen mit je vier Kontakten) in Form von elastisch verformbaren Kontaktfedern auf, die in der Datenaustauschposition mit ihren freien Kontaktenden (Kontaktflächen) **4a** in die Kartenbahn hineinragen. Dabei findet nur über einen der Kontakte 4, nämlich über den sogenannten I/O-Kontakt **4',** der eigentliche Datenaustausch mit dem Mikrochip der Chipkarte 3 statt. Die Kontakte 4 sind an einem Kontaktträger **5** befestigt, der im Kartenlesergehäuse 2 in Einführrichtung **6** der Chipkarte 3 zwischen einer Ausgangsstellung **(****Fig. 2a****)** und einer Endstellung **(****Fig. 2b****)** verschiebbar geführt ist und von einer eingeführten Chipkarte 3 gegen die Wirkung einer nicht gezeigten Rückstellfeder bis in die Endstellung mitgenommen wird. In der Datenaustauschposition liegt die Chipkarte 3 auf einer gehäuseseitigen Auflagefläche **7** auf, die für jeden der Kontakte 4 eine Durchgangsöffnung **8** aufweist, durch die hindurch die Kontakte 4 in Anlage an die eingeführte Chipkarte 3 angehoben sind. Durch die eingeführte Chipkarte 3 werden die Kontaktflächen 4a aus der Kartenbahn ausgelenkt und kontaktieren in der Datenaustauschposition die elektrischen Kontaktfelder der Chipkarte 3.

Wie in Fig. 1b gezeigt, weist der Kontaktträger 5 an seinen beiden Seiten jeweils zwei Führungszapfen **9** auf, die in einer schräg zur Einführrichtung 6 ansteigenden Kulisse **10** des Kartenlesergehäuses 2 geführt sind, um den von der Chipkarte 3 in Einführrichtung 6 mitgenommenen Kontaktträger 5 anzuheben, bis in der Datenaustauschposition die Kontakte 4 durch die Durchgangsöffnungen 8 hindurch in Anlage an die eingeführte Chipkarte 2 angehoben sind. Am Kontaktträger 5 steht vorne ein Kartenanschlag **11** in die Kartenbahn hoch, so dass der Kontaktträger 5 von der eingeführten Chipkarte 3 in Einführrichtung 6 bis in seine Endstellung mitgenommen und dadurch angehoben wird, um die Kontakte 4 durch ihre Durchgangsöffnungen 8 hindurch in Anlage an die eingeführte Chipkarte 3 anzuheben (Fig. 2b). Nach dem Datenaustausch wird die Chipkarte 3 entgegen der Einführrichtung 6 zurückbewegt, wodurch der Kontaktträger 5, angetrieben von der Rückstellfeder, zurück in seine Ausgangsstellung geschoben wird.

Wie in Fig. 2a gezeigt, kann zu Manipulationszwecken auf die Unterseite der Chipkarte 3 eine Manipulationsfolie **12** mit einer klebenden Unterseite aufgebracht werden (Fig. 2a). Beim Anheben des Kontaktträgers 5 werden die Kontakte 4 gegen die Manipulationsfolie 12 gedrückt, die daran kleben bleibt (Fig. 2b). Beim Absenken des Kontaktträgers 5 wird die Manipulationsfolie 12 durch die Auflagefläche 7 von den Kontakten 4 gelöst und klebt dann auf der großflächigen Auflagefläche 7 fest **(****Fig. 2c****).** Beim erneuten Einführen einer Chipkarte 3 liegen die Kontakte 4 dann über die dazwischen liegende Manipulationsfolie 12 an den Kontaktfeldern der Chipkarte 3 an. Die Manipulationsfolie 12 weist im Bereich der Kontakte 4 elektrische Durchkontaktierungen (nicht gezeigt) auf, welche die elektrische Verbindung zwischen den Kontakten 4 und den Kontaktfeldern weiterhin aufrechterhalten. Außerdem trägt die Manipulationsfolie 12 eine nicht gezeigte, von außen abrufbare Schnittstelle (z.B. in Form eines Senders), die mit der dem I/O-Kontakt 4' zugeordneten Durchkontaktierung verbunden ist, um die über den I/O-Kontakt 4' übertragenen Daten zu Manipulationszwecken mitzulesen.

Um solch einen Manipulationsversuch zu erkennen, umfasst der Kartenleser 1 weiterhin eine Detektoreinrichtung **13** in Form einer Einweglichtschranke, die durch die Durchgangsöffnung 8 des I/O-Kontakts 4' hindurchstrahlt. Die Einweglichtschranke 13 besteht aus einer Lichtstrahlenquelle **14** und einem Sensor **15** für diese Strahlung. Die Lichtstrahlenquelle 14 kann beispielsweise durch ein ortsfestes Faserende eines Lichtleiters (nicht gezeigt) gebildet sein, in dessen anderes Ende das Licht einer Lichtquelle (nicht gezeigt) eingekoppelt wird. Der von der Lichtstrahlenquelle 14 ausgesandte Lichtstrahl **16** geht durch die Durchgangsöffnung 8 des I/O-Kontakts 4' und trifft auf den Sensor 15, der am verschiebbaren Kontaktträger 5 befestigt ist.

Immer wenn eine eingeführte Chipkarte 3 aus dem Kartenleser 1 wieder ausgegeben worden ist, wird durch die Einweglichtschranke 13 überprüft, ob ein Angriff durch eine Manipulationsfolie 12 stattgefunden hat. Die Lichtstrahlenquelle 14 ist am Kartenlesergehäuse 2 derart angeordnet, dass der Lichtstrahl 16 in der Ausgangsstellung des Kontaktträgers 5, also bei nicht eingeführter Chipkarte 3, durch die Durchgangsöffnung 8 genau an der Position durchtritt, an der sich in der Datenaustauschposition die Kontaktfläche 4a des I/O-Kontakts 4' befindet. Der Sensor 15 ist am Kontaktträger 5 zwischen den beiden Kontaktreihen derart angeordnet, dass er in der Ausgangsstellung des Kontaktträgers 5 vom Lichtstrahl 16 getroffen wird. Eine vom Sensor 15 festgestellte Unterbrechung oder Abschwächung des Lichtstrahls 16 wird von einer Überwachungselektronik der Detektoreinrichtung 13 als Shim-Attacke erkannt, die dann keinen Lesevorgang des Kartenlesers 1 mehr zulässt.

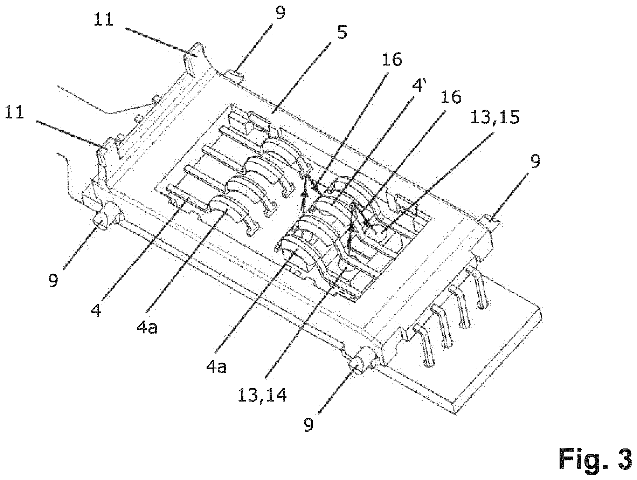

Wie in **Fig. 3** gezeigt, kann die Detektoreinrichtung 13 auch als eine auf die Durchgangsöffnung 8 gerichtete Reflexlichtschranke mit Lichtstrahlenquelle 14 und einem Sensor 15 ausgebildet sein, die beide entweder am verschiebbaren Kontaktträger 5 oder ortsfest am Kartenlesergehäuse 2 angeordnet sind. Im Fall einer Manipulationsfolie 12 wird der Lichtstrahl 16 an der Manipulationsfolie 12 reflektiert und trifft auf den Sensor 15, was von der Überwachungselektronik als Shim-Attacke erkannt wird, die dann keinen Lesevorgang des Kartenlesers 1 mehr zulässt. Im gezeigten Ausführungsbeispiel weist die Detektoreinrichtung 13 zwei Reflexlichtschranken auf, die auf unterschiedliche Bereiche der Durchgangsöffnung 8 des I/O-Kontakts 4' gerichtet sind.

Statt am verschiebbaren Kontaktträger 5 kann der Sensor 15 alternativ auch ortsfest am Kartenlesergehäuse 2 angeordnet sein, sofern der Sensor 15 in der Ausgangsstellung des Kontaktträgers 5 vom Lichtstrahl 16 getroffen wird.

Alternativ zur Lichtschranke kann die Detektoreinrichtung 13 auch als eine Kamera ausgebildet sein, um die Durchgangsöffnung 8 des I/O-Kontakts 4' einem Soll-Ist-Vergleich zu unterziehen. Über die Kamera wird jeweils ein Bild vor und nach dem Einführen einer Chipkarte 3 aufgenommen und später dann miteinander verglichen. Eine dabei festgestellte Abweichung wird von der Überwachungselektronik als Shim-Attacke erkannt, die dann keinen Lesevorgang des Kartenlesers 1 mehr zulässt.

Die Detektoreinrichtung 13 kann auch als ein auf die Durchgangsöffnung 8 gerichteter, induktiver Sensor ausgebildet sein, um die Durchgangsöffnung 8 des I/O-Kontakts 4' einem Soll-Ist-Vergleich zu unterziehen. Der induktive Sensor vergleicht jeweils vor und nach dem Einführen einer Chipkarte 3 das elektromagnetische Feld in der Durchgangsöffnung 8 des I/O-Kontakts 4'. Eine dabei festgestellte Abweichung wird von der Überwachungselektronik als Shim-Attacke erkannt, die dann keinen Lesevorgang des Kartenlesers 1 mehr zulässt.

In dem in den Fign. 1 bis 3 gezeigten Ausführungsbeispiel mit verschiebbaren Kontakten 4 ist die Detektoreinrichtung 13 auf diejenige Position **17** (Fig. 1a) im Kartenleser 1 gerichtet, an der sich die Kontaktfläche 4a des I/O-Kontakts 4' in der Datenaustauschposition befindet und/oder auf den Bereich um diese Position 17 herum. Im Fall ortsfest im Kartenlesergehäuse 2 angeordneter Kontakte 4 und fehlender Auflagefläche ist die Detektoreinrichtung 13 hingegen auf die Kontaktfläche 4a des I/O-Kontakts 4' und/oder auf den Bereich um diese Kontaktfläche 4a herum gerichtet, um so eine auf die Kontaktflächen 4a der Kontakte 4 aufgeklebte Manipulationsfolie 12 zu detektieren.

## Patentansprüche

1. Kartenleser (1) zum Datenaustausch mit einer bis in eine Datenaustauschposition in ein Kartenlesergehäuse (2) eingeführten Chipkarte (3),
mit mindestens einem im Kartenlesergehäuse (2) ortsfest oder in Karteneinführrichtung (6) verschiebbar angeordneten, elektrischen Kontakt (4), der in der Datenaustauschposition mit einer Kontaktfläche (4a) in die Kartenbahn der eingeführten Chipkarte (3) hineinragt, und
mit mindestens einer Detektoreinrichtung (13), die bei ortsfest im Kartenlesergehäuse (2) angeordnetem Kontakt (4) auf die Kontaktfläche (4a) des Kontakts (4) oder auf den Bereich um diese Kontaktfläche (4a) herum gerichtet ist oder die bei in Karteneinführrichtung (6) verschiebbar im Kartenlesergehäuse (2) angeordnetem Kontakt (4) auf diejenige Position im Kartenleser (1), an der sich die Kontaktfläche (4a) in der Datenaustauschposition befindet, oder auf den Bereich um diese Position herum gerichtet ist,
**dadurch gekennzeichnet,**
**dass** die mindestens eine Detektoreinrichtung (13) als eine Einweglichtschranke, eine Reflexlichtschranke, eine Kamera oder ein induktiver Sensor ausgebildet ist.

2. Kartenleser nach Anspruch 1, **gekennzeichnet durch** eine Auflagefläche (7), auf der die eingeführte Chipkarte (3) in der Datenaustauschposition aufliegt, wobei der mindestens eine Kontakt (4) in der Datenaustauschposition eine Durchgangsöffnung (8) der Auflagefläche (7) durchgreift.

3. Kartenleser nach Anspruch 2, **dadurch gekennzeichnet, dass** das Kartenlesergehäuse (2) die Auflagefläche (7) aufweist.

4. Kartenleser nach Anspruch 2 oder 3, **dadurch gekennzeichnet, dass** der mindestens eine Kontakt (4) an einem Kontaktträger (5) befestigt ist, der im Kartenlesergehäuse (2) in Einführrichtung (6) der Chipkarte (3) zwischen einer Ausgangs- und einer Endstellung verschiebbar geführt ist und von einer eingeführten Chipkarte (3) bis in die Endstellung mitgenommen wird, in welcher der mindestens eine Kontakt (4) durch die Durchgangsöffnung (8) hindurch in Anlage an die eingeführte Chipkarte (3) bewegt ist.

5. Kartenleser nach Anspruch 4, **dadurch gekennzeichnet, dass** zumindest ein Teil der mindestens einen Detektoreinrichtung (13) am verschiebbaren Kontaktträger (5) befestigt ist.

6. Kartenleser nach einem der vorhergehenden Ansprüche, **dadurch gekennzeichnet, dass** zumindest ein Teil der mindestens einen Detektoreinrichtung (13) ortsfest am Kartenlesergehäuse (2) befestigt ist.

## Claims

1. Card reader (1) for data exchange with a chip card (3) that has been inserted into a card reader housing (2) up to a data exchange position, comprising at least one electrical contact (4) that is arranged fixedly in the card reader housing (2) or displaceably in the card insertion direction (6) and that, in the data exchange position, projects into the card path of the inserted chip card (3) by way of a contact area (4a), and
at least one detector device (13), which, in the case of a contact (4) that is fixedly arranged in the card reader housing (2), is directed at the contact face (4a) of the contact (4) or at the region around said contact face (4a) or which, in the case of a contact (4) that is displaceably arranged in the card reader housing (2) in the card insertion direction (6), is directed at the position (17) in the card reader (1) at which the contact face (4a) is located in the data exchange position, or is directed at the region around this position,
**characterized in that**
the at least one detector device (13) is embodied as a one-way light barrier, a reflection light barrier, a camera or an inductive sensor.

2. Card reader according to claim 1, **characterized by** a bearing face (7), against which the inserted chip card (3) bears in the data exchange position, wherein, in the data exchange position, the at least one contact (4) reaches through a through-opening (8) in the bearing face (7).

3. Card reader according to claim 2, **characterized in that** the card reader housing (2) has the bearing face (7).

4. Card reader according to claim 2 or 3, **characterized in that** the at least one contact (4) is attached to a contact carrier (5), which is guided in the card reader housing (2) so as to be displaceable in the insertion direction (6) of the chip card (3) between a starting position and an end position and is carried along by an inserted chip card (3) up to the end position in which the at least one contact (4) is moved through the through-opening (8) for bearing against the inserted chip card (3).

5. Card reader according to claim 4, **characterized in that** at least one part of the at least one detector device (13) is attached to the displaceable contact carrier (5).

6. Card reader according to one of the preceding claims, **characterized in that** at least one part of the at least one detector device (13) is attached fixedly to the card reader housing (2).

## Revendications

1. Lecteur de carte (1) destiné à l'échange de données, ledit lecteur comprenant
une carte à puce (3) insérée dans un boîtier de lecteur de carte (2) jusque dans une position d'échange de données,
au moins un contact électrique (4) qui est disposé dans le boîtier de lecteur de carte (2) de manière fixe ou déplaçable dans la direction d'insertion de carte (6) et qui, dans la position d'échange de données, fait saillie avec une surface de contact (4a) dans la trajectoire de la carte à puce insérée (3), et
au moins un dispositif de détection (13) qui, lorsque le contact (4) est disposé de manière fixe dans le boîtier du lecteur de carte (2), est dirigé vers la surface de contact (4a) du contact (4) ou vers la région située autour de cette surface de contact (4a), ou qui, lorsque le contact (4) est disposé dans le boîtier du lecteur de carte (2) de manière déplaçable dans la direction d'insertion de carte (6), est dirigé vers la position dans le lecteur de carte (1) à laquelle la surface de contact (4a) se trouve dans la position d'échange de données ou vers la zone située autour de cette position, **caractérisé en ce que**,
l'au moins un dispositif de détection (13) est conçu comme une barrière lumineuse unidirectionnelle, une barrière lumineuse réflexe, une caméra ou un capteur inductif.

2. Lecteur de carte selon la revendication 1, **caractérisé par** une surface d'appui (7) sur laquelle la carte à puce (3) insérée est en appui dans la position d'échange de données, l'au moins un contact (4) s'engageant à travers une ouverture traversante (8) de la surface d'appui (7) dans la position d'échange de données.

3. Lecteur de carte selon la revendication 2, **caractérisé en ce que** le boîtier de lecteur de carte (2) comporte la surface d'appui (7).

4. Lecteur de carte selon la revendication 2 ou 3, **caractérisé en ce que** l'au moins un contact (4) est fixé à un support de contacts (5) qui est guidé de manière déplaçable dans la direction d'insertion (6) de la carte à puce (3) entre une position de sortie et une position d'extrémité dans le boîtier de lecteur de carte (2) et qui est entraîné par une carte à puce insérée (3) jusqu'à la position d'extrémité dans laquelle l'au moins un contact (4) est déplacé à travers l'ouverture traversante (8) pour venir en appui sur la carte à puce insérée (3).

5. Lecteur de carte selon la revendication 4, **caractérisé en ce qu'**au moins une partie de l'au moins un dispositif de détection (13) est fixée au support de contact déplaçable (5).

6. Lecteur de carte selon l'une des revendications précédentes, **caractérisé en ce qu'**au moins une partie de l'au moins un dispositif de détection (13) est fixée en place au boîtier de lecteur de carte (2).
